Europäisches Patentamt

European Patent Office

Office européen des brevets

(11) Publication number: **0 198 676**
A2

# EUROPEAN PATENT APPLICATION

(21) Application number: 86302679.5

(51) Int. Cl.⁴: **G 02 B 3/02**

(22) Date of filing: **10.04.86**

(30) Priority: **12.04.85 ES 542197**
**16.04.85 ES 542267**

(71) Applicant: **Moreno Gil, Oscar, Avda. del Manzanares 86, Madrid (ES)**

(43) Date of publication of application: **22.10.86 – Bulletin 86/43**

(72) Inventor: **Moreno Gil, Oscar, Avda. del Manzanares 86, Madrid (ES)**

(84) Designated Contracting States: **AT BE CH DE FR GB IT LI LU NL SE**

(74) Representative: **Mayes, Stuart David et al, BOULT, WADE & TENNANT 27 Furnival Street, London, EC4A 1PQ (GB)**

(54) **Bicurve lenses.**

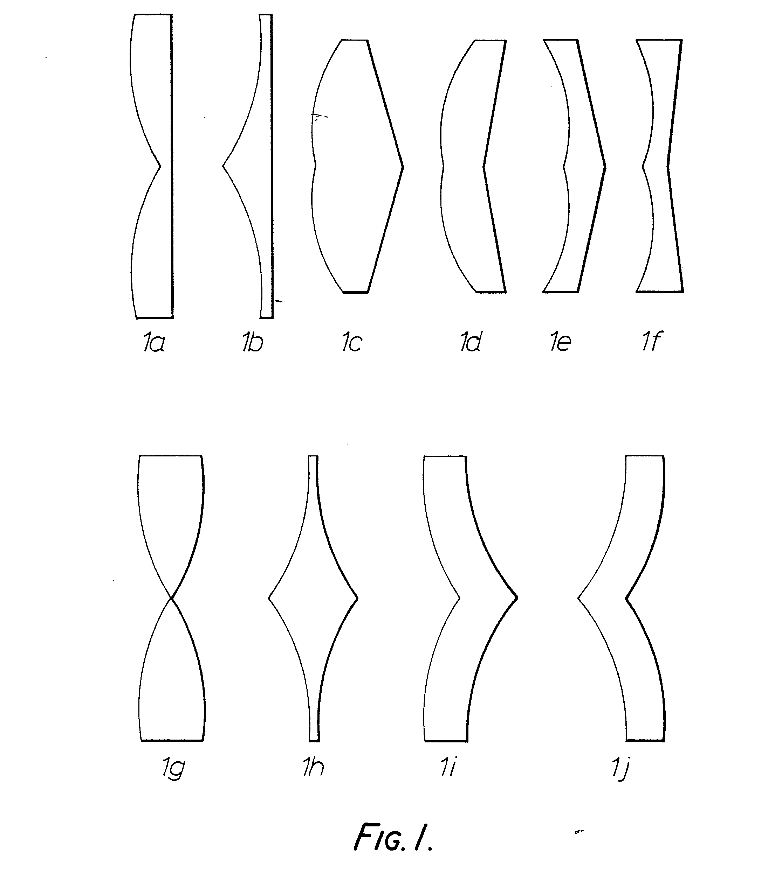

(57) At least one surface of a lens has a double curve with a surface discontinuity ar the optical axis. A number of combinations of surfaces are possible such as the bicurve-convexo lens of Figure 1a. Bicurve lenses may be used to provide a greater light capture and depth of field than conventional lenses with reduced sperical aberration. Because an annular focus is produced, bicurve lenses may be used with a diaphragm which exands radially from the optical axis to stop the lens, this arrangement being more compact than conventional aperture adjusting devices.

1a  1b  1c  1d  1e  1f

1g  1h  1i  1j

ACTORUM AG

## BICURVE LENSES

The present invention relates to optical lenses which have a double curve in one of their two surfaces, or in both, called bicurve lenses, bicurve-conical lenses likewise being described, alternatives of ther former and in which one of its surfaces is conical, and bicurve-monocurve lenses, in which one of the surfaces has only one spherical curve.

With reference to solely bicurve lenses, these can be of two kinds, namely: a) that wherein the lens is wider at the edges than at the center, in which it has the minimum width, but the curve which descends toward the center is not concave but convex, so that, on a cross-section through the lens center, the curved surface presents the appearance of being formed by two ridges which ascend toward the edges in two increasing convex lines; and b) that wherein the lens is narrower at the edges than at the center, where it has the maximum width, but the curve which ascends from the edge toward the center is not convex but concave, so that on a cross-section through the lens center, the curved surface has the appearance of being formed by two depressions which descend from the center toward the edges in two diminishing concave lines.

In reality the lens sections described have respectively the appearance which would be produced, on the one hand, dividing into two parts through the center a conventional or traditional convex lense then assembling both parts and changing their place and, on the other hand, the appearance which a conventional or traditional concave lense would have as a result if, divided into two parts at the center, these had had their place changed.

Bicurve-conical lenses, which likewise constitute an object of the present invention, have one conical surface and the other bicurve, the conical surface having a convex or concave appearance. The bicurve surface constitutes the opposite side to the conical side and can have a twofold aspect, namely: a) that of two convex protuberances (of lenticular curvature), which are situated on each side of the focal axis and are joined by the center, thereby forming a depression toward the centre or central bicurve-concavo vertex or apex and b) that of two lenticular concavities, likewise situated on each side of the focal axis and similarly joined by the center or focal axis in the part opposite to the cone vertex or apex, whereby they form a convexity at the center.

The bicurve-monocurve lenses, like the earlier ones, still having a bicurve surface structure and the other surface is formed by a single spherical surved surface, of convex configuration or concave configuration.

The improvements achieved with the bicurve, bicurve-conical and bicurve-monocurve lenses, with respect to the conventional concave and convex curve lenses, will be explained hereafter with the aid of a series of practical examples, which improvements can be summarized in the following points:

- increase in the luminosity;

- increase in the field depth;

- diminished spherical aberration.

1.- Luminosity increase.

Assume, for the purpose, a lens which has 16 mm. focal distance and a diameter of 16 mm.

An f/16 objective, for example, always means that the opening of the objective is 16 times smaller than the focal distance.

In a conventional lens with the stated measurements, the light which would be obtained with an f/4 would be that collected by a surface occupied by a circle whose diameter would be the fourth part of the focal distance; that is:

$$3.14 \ . \ 2^2 = 12.56 \ mm^2$$

The same example, in a bicurve lens, the light obtained by an f/4 objective will be that which corresponds to a circle whose surface is comprised between the outer circumference of the lens and another two milimeters toward the interior of the radius; that is:

$$3.14 \ . \ 8^2 - 3.14 \ . \ 6^2 = 200.96 - 113.04 = 87.92 \ mm^2$$

$$87.92/12.56 = 7$$

The second objective, at the same f/4 aperture, turns out 7 times more luminous according to the example given.

Assume, to continue with the same example, that the opening selected is f/8.

In a conventional lens the light admission surface will be:

$$3.14 \cdot 1^2 = 3.14 \text{ mm}^2$$

($1^2$ because f/8 is equal to the diameeter of the aperture being $16/8 = 2$; then the radius is 1).

In a bicurve lens, the light admission surface will be:

$$3.14 \cdot 16^2 - 3.14 \cdot 15^2 = 97.34 \text{ mm}^2$$

$$97.34 \text{ mm}^2 / 3.14 \text{ mm}^2 = 31$$

In the example considered the luminosity of a bicurve lens objective is 31 times greater than that of a traditional objective.

There is, therefore, increasing progression to the effect that the less the aperture utilized the greater the difference in luminosity in favor of the bicurve lenses over conventional ones.

And this is so because in conventional lenses the focus is situated at a point of the central axis; hence, because of this, the diaphragm closes inwards, toward the center, toward the place where the focus is to be found. Whereas in the bicurve lenses the "focal circumference" is situated in the cyclindrical surface corresponding to the projection of the outer circumference of the lens, and thus the diaphragm will close the surface in the direction of the focal plane; that is, outwards. Therefore, the outer part is greater, due to the greater surface which, the diameter being the same, the circular caps have with respect to the interior ones.

2.- Increase in the field depth.

This is a consequence of the foregoing, If a bi curve objective, diaphragammed to the same extent as a classic objective, obtains greater luminosity it likewise achieves greater field depth.

Or in other words: if, for a traditional objective, in a given opening,the luminosity is scant, the objec tive will have to be opened more, diminishing the field depth. But a bicurve lens objective achieves, with the same diaphragmmation, much more luminosity so that, under the same outside light conditions, one will always be able to operate with lesser diaphragmmations; therefore, with greater field depth.

Specifically, in the case of f.8, exemplified earlier, that opening in a bicurve lens objective is only able to be equalled in luminosity by an f/5 57 aperture. This results in ensuing diminishing of the field depth.

3:- The spherical aberration diminishes because there is a greater tendency to make the admission of light by the edges of the bicurve lenses, while neutralizing at the center of the same.

In conventional (convergent) lenses it is known that the spherical aberration is produced more intensely toward the edges, which are thinner, so that among the measures which are taken in order to avoid this, one consists of suppressing the thinner outer circular cap.

But in bicurve lenses (convergent-divergent), the outer cap is thicker (hence it is the one producing the least aberration, insofar as it is the one closest to the focal plane and deflects the light less) and the center is thinner (which would be what would produce the light aberration, on being further away and deflecting the light more intensely).

But suppressing in the bicurve lenses the thin central part (instead of the thin outer part of ordinary lenses), it so happens that, the supressed circle radius being the same, the suppressed surface is less in bicurve lenses. Less space is lost in them, for the simple reason, stated earlier, that equal radii generate smaller surfaces in the inner circular caps.

Hence, a normal lens having a diameter of 16 mm., whose edges may have been suppressed, will have a suppressed surface of 188.40 mm$^2$, whereas a bicurve of the same size, whose center will have been suppressed in a radius of 2 mm, will have a suppressed surface of 12.56 mm$^2$. For the free surface to be equal in both lenses, the central suppressed part in the bicurve lens should be a radius of 7.7459, in which $3.14 \cdot 7.7459^2 = 188.40$ mm$^2$.

And this central space, being permanent in both lenses (188.40 mm$^2$), in the bicurve allows a much more ample suppression radius, whereby the part most tending to produce the spherical aberration is considerably reduced.

Moreover, this way a central space is created which, if need be, allows one to place the diaphragm which, on operating, will extend its radius of action toward the outside.

In accord with what is stated the bicurve lenses are characterized in that they present a double curvature in one of their surfaces or in both, or in that one surface can be just conical or just monocurve, the lens being able to be wider at the edges than at the center, the curve which descends toward the center being convex, so that, on a cross-section through the center of the lens, at least one of its surfaces is curved and has the appearance of being formed by two ridges which ascend toward the edges in two increasing convex lines, or the lens is narrower at the edges than at the center, where it acquires the maximum width, the curve which ascends from the edge toward the center being concave, so that, on a cross-section of the center of the lens, at least one of its surfaces is curved and had the appearance of being formed by two depressions which descend from the center until the edges in two decreasing concave lines.

The bicurve lenses according to the invention are characterized in that they can have one surface conical and the other one bicurve, and likewise in that they can have one surface monocurve and the other one bicurve.

According to one of the aspects of the invention, bicurve lenses can be exclusively bicurve and with double curvature in a single surface, the other one being flat or both surfaces bicurve which can be placed in the same or in the opposite direction, the flat bicurve-convexo, flat bicurve-concavo, bicurve-biconvexo, bicurve-biconcavo, bicurve-convexo-concavo and bicurve-concavo-convexo ones, all being exclusively bicurve lenses., flat bicurve-convexo, bicurve-biconvexo and bicurve-convexo-concavo lenses being convergent-divergent,and bicurve-concavo lenses being flat, bicurve-biconcavo and bicurve-concavo-convex lenses being divergent-convergent.

According to the invention the convergent-divergent lenses gather the light, making the rays cross, in a circumference (whoce radius coincides with that of the lens), called "focal circumference" and which is to be found behind the lens, separated from the edges of this by the same focal distance as the one which, the circumstances being the same, would correspond to a normal convergent lens, and the focal axis, instead of in the center, is situated at the ends, occupying a cylindrical surface.

According to another aspect of the invention, the divergent-convergent lenses separate from one another the refracted light rays, but making them fall toward the interrior, toward the central axis, in which they cross,and their inverse prolongation makes them likewise cross forming a virtual circumference ("focal circumference"), which have the same diameter as the lens, being situated in front of it and separated from the edges of this by the same focal distance as that which, under the same conditions, would correspond to a normal divergent lens, and the focal axis, instead of in the center, is situated at the ends, occupying a cyclindrical surface.

The bicurve lenses object of the invention can join one another forming optical systems, in such a way that, when the first lens is convergent-divergent, the second one can be of the same nature or divergente-convergente; in the former case the light rays are projected in parallel beams forming a circular cap whose width will depend on the distance between both lenses, while in the case of a convergent-divergent lens with one divergent-convergent one, the rays are projected in parallel beams forming a circular cap, whose width will likewise depend on the distance between both lenses.

Finally, the bicurve lenses in accord with the invention are characterized in that when the optical system formed by them has to incorporate a diaphragm, this is placed in the center of the objective, occupying the least possible space, such that, from the center, it closes the objective extending toward the outside, the opaque part of the light commencing in the center of the lens and extending out, in circular fashion, toward the outside until occupying the entire opening, the transparent part of the outer circular cap being non-diaphragammed and this circular cap being narrower the more extended the diaphragm.

As has been indicated, the bicurve lenses object of the invention increase the luminosity, the field depth and diminish the spherical aberration.

Below, with the aid of the accompanying drawings, the bicurve, or bicurve-conical lenses object of the invention will be described, without it being necessary to specifically explain the bicurve-monocurve lenses, along with different objectives which can be formed with the arrangement of this kind of lenses. They show:

- figure 1, (broken down from 1a until 1j) different kinds of bicurve and bicurve-conical lenses;

- figure 2, the behaviour of the refracted light in a convergent-divergent lens;

- figure 3, the behavious of the refracted light in a divergent-convergent lens;

- figure 4, the light path in the case of a convergent-divergent lens followed by another divergent-convergent one;

- figure 5, the light path in a convergent-divergent lens followed by another one of the same nature;

- figure 6, the light path in a convergent-divergent lens followed by another convergent conical one;

- figures 7 and 8, objectives formed by conical mirrors or by conical lenses; and

- figures 9 to 11, examples of the behaviour of the incident energy employing objectives with bicurve and bicurve-conical lenses of this invention.

In figures 1a to 1j different modes of bicurve and bicurve-conical lenses are shown, object of the invention. Concerning the former these can be classified as flat

bicurve -convexo (figure 1a), bicurve-concavo (figure 1b), bicurve-convexo (figure 1g), bicurve-biconcavo (figure 1h), bicurve-convexo-concavo (figure 1i) and bicurve-concavo--convexo (figure 1j).

Flat bicurve-convexo, bicurve-convexo and bicurve--convexo-concavo lenses are convergent-divergent, conventionally symbolized with a vertical stroke which, divided through the middle by an axis, is completed at its ends by two curved arcs in the direction of the axis.

Flat bicurve-concavo, bicurve-biconcavo and bi-curveconcavo-convexo lenses are divergent-convergent, conventionally symbolized with a vertical stroke which, divided through the middle by an axis, is completed at its ends by two arcs curved in the direction opposite to the axis.

In relation with bicurve-conical lenses, likewise object of this invention, these can be represented by four forms, such as bicurve-convexo conic-convexo (figure 1c), bicurve-convexo-conic-concavo (figure 1d), bicurve-bicon-cavo-conic-convexo (figure 1e) and bicurve-concavo-conic--concavo (figure 1f).

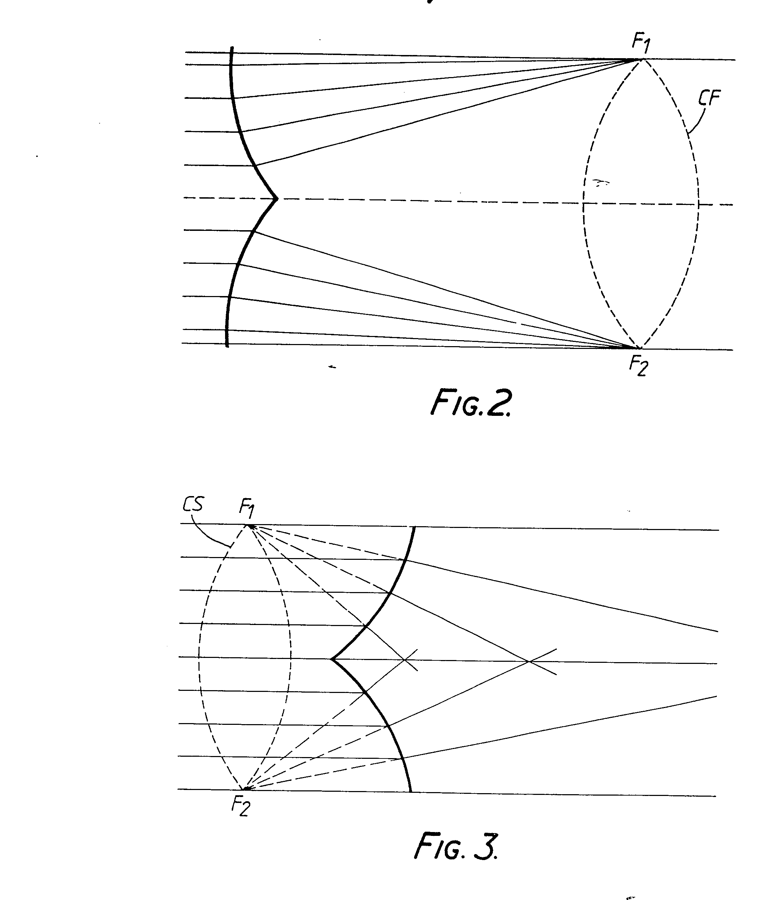

Figure 2 shows the behaviour of the light on being refracted by convergent-divergent lenses, such as flat bicurve-convexo, bicurve-convexo and bicurve-convexo and bicurve-convexo-concavo lenses shown in figures 1a, 1g and 1i. As can be observed from figure 2, a convergent-divergent lens gathers the refracted light in a circumference, whose radius coincides with that of the lens, called "focal circumference" (CF), which is to be found separated from its edges by the same focal distance which, in the same circumstances, corresponds to a normal convergent lens, in which the diameter of the focal circumference is comprised between $F_1$ and $F_2$.

In figure 2 it can be observed that the focal axis is situated at the ends, in a cylindrical surface, instead of in the center as occurring in the case of a traditional convergent lens. It is observed that, in effect, the focal distance is the same as in the case of a traditional convergent lens, and that the rays converge toward the outside forming not a focus but a circumference in which the rays cross (focal circumference), whose diameter coincides with that of the lens.

In figure 3 a divergent-convergent lens is represented such as is the case of flat bicurve-concaveo, bicurve-concavo and bicurve-concavo-convexo lenses represented in figures 1b, 1h and 1j. As can be observed from figure 3, the divergente-convergent lens separates from one another the refracted light rays, but making them fall toward the central lens axis, in which they cross, and their inverse prolongation makes them likewise cross forming a virtual circumference (focal circumference), situated in front of the lens and separated from its edges by the same focal distance which, in equal conditions, would correspond to a normal divergent lens, in which the diameter of the focal circumference is comprised between $F_1$ and $F_2$.

In figure 3 it can be observed that the focal axis is situated at the ends, occupying a cyclindrical surface (CS) instead of in the center. It is observed that, in effect, the focal distance is the same as in the case of a traditional divergent lens, and that the rays diverge among themselves but with direction to the lens axis forming not a virtual focus but a virtual focal circumference, in which the prolongations of the rays cross and whose diameter coincides with that of the lens.

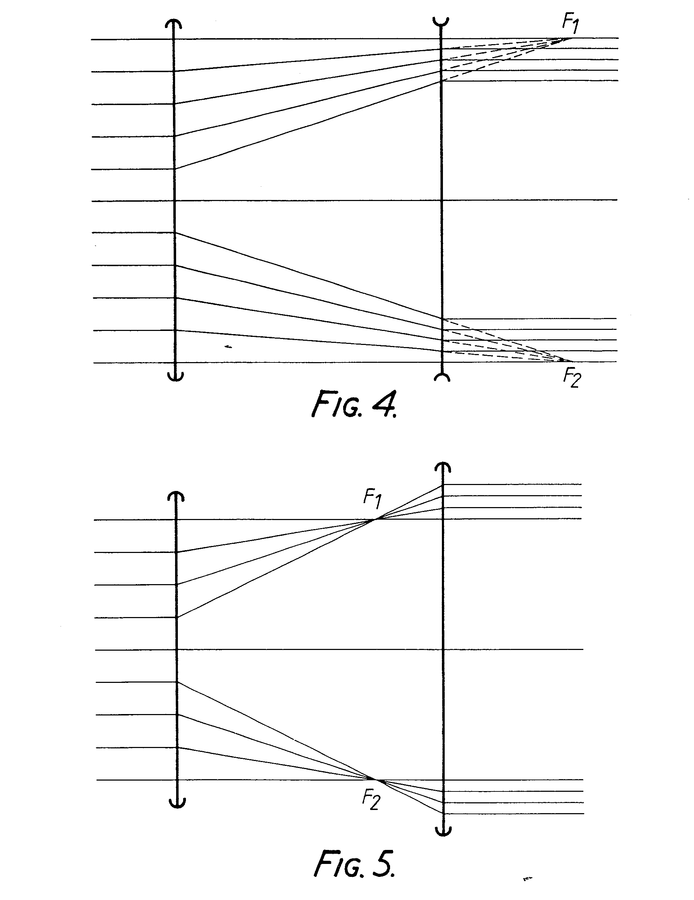

To study the behaviour of light when instead of a single lens two or more are used in combination, one will start from the basis that the first one, of the corresponding objective, is always convergent-divergent: the behaviour of the light in this case will be explained with the aid of figures 4 to 6, the first of them representing a convergent-divergent lens followed by another divergent-convergent, the latter situated between the first one and the focal circumference. As can be observed from figure 4, the light path has been concentrated on a circular cap starting from the second lens. The rays are situated parallely and remain in the same position as they entered (righthand image).

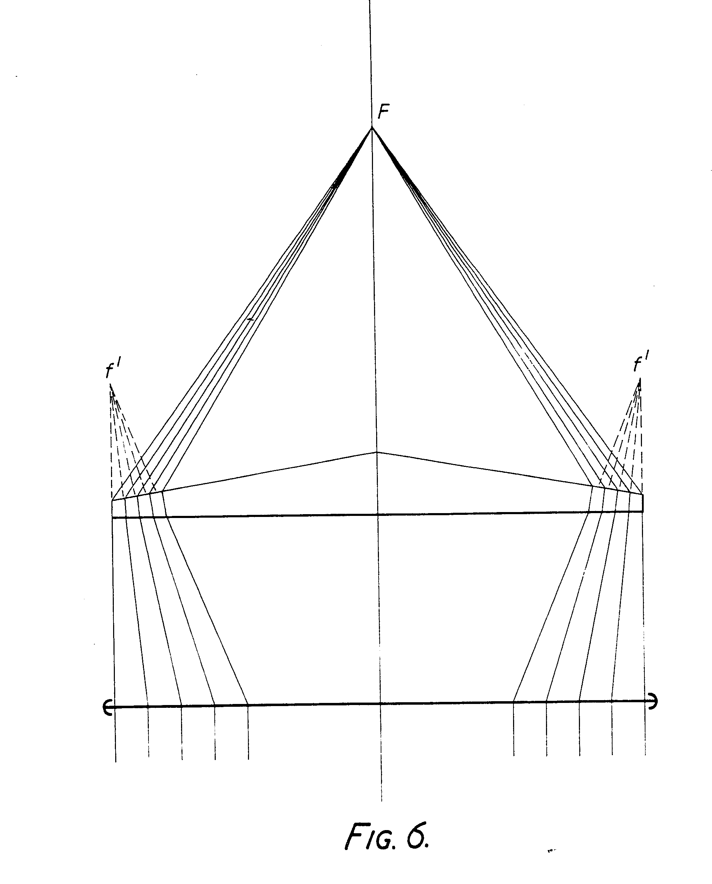

In figure 5 the behaviour of the light is observed on passing through a convergente-divergente lens followed by another of the same nature, situated after the rays have crossed in the focal circumference (inverse afocal system). The second lens is necessarily of greater diameter than the first one.

The light path, just as this can be observed, has now likewise concentrated itself in a circular cap, with a greater radius than in the preceding case. The rays remain parallel but in inverted position with respect to the original one.

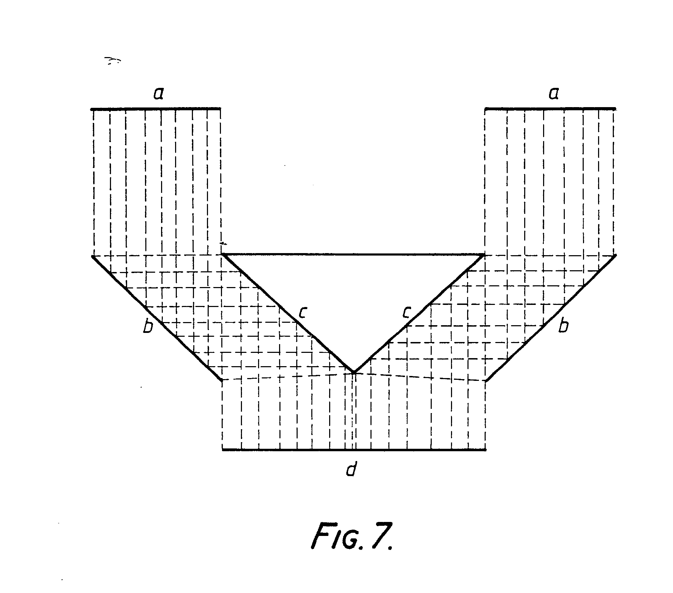

In the case of figure 6 the behaviour of the light is observed on passing through a convergente-divergente lens followed by another convergente conical one. In this case the light path is altered by the convergent conical lens, making it fall on a point focus to which the rays arrive maintaining the non-inverted path for them.

In the cases of figures 4 and 5, the parallely placed light after the second refraction can be concentrated on a point focus by means of a traditional convergent lens.

Following these simple descriptions, obtaining the image will be performed in accord with traditional processes.

As has been stated, the light in these objectives tends to diverge toward the exterior, toward the external circles of the lenses.

This means that the diaphragm (when it is of interest to use diaphragammed objectives, for which it is going to be assumed that these are those relating to photographical optics) should be situated in the middle of the lens, occupying the least possible space, and from the center closing the objective stretching out toward the outside. Therefore the diaphragm will have to operate just the contrary to that in the ordinary present-day system: The opaque part of the light commences in the center of the lens and, in circular fashion, extends toward the exterior until occupying the whole lens surface; the transparent part will be the outer circular lens cap. This circular cap will be more narrow the more extended the diaphragm. And the chamber will receive that much less light the greater the extension (the aperture to the inverse) of the diaphragm.

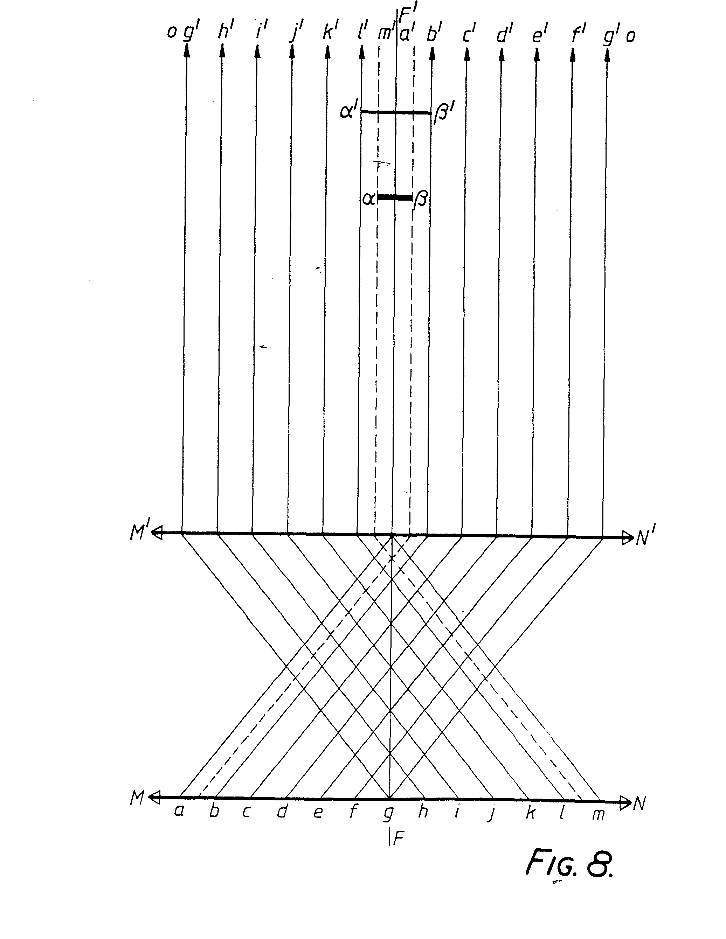

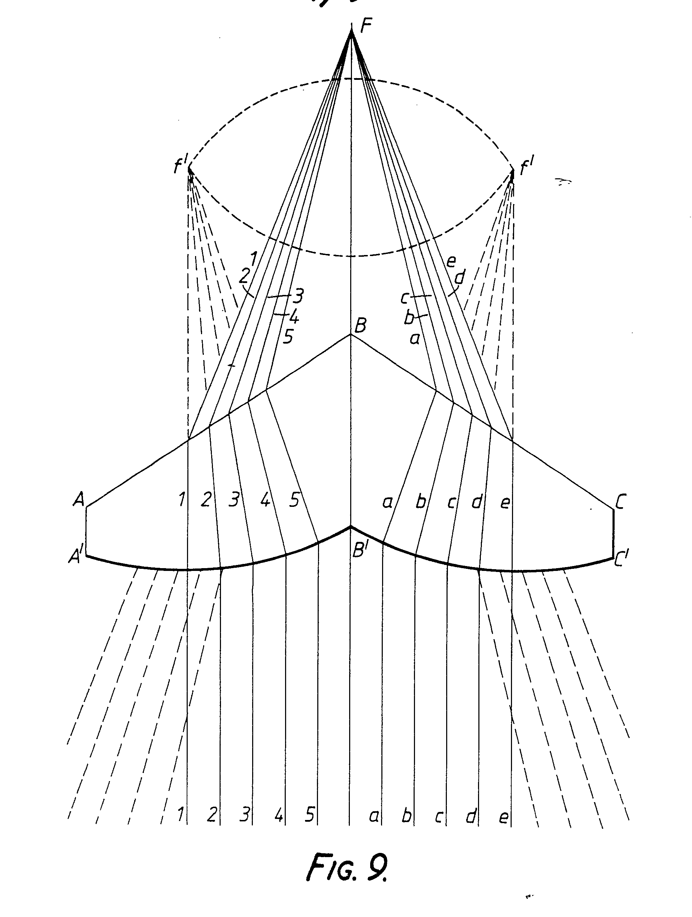

In figures 7 and 8 the utility is visually represented deriving from the applicability of concentric conical mirrors and of conical lenses. As can be observed, the energy is concentrated in a peculiar way in these cases; that is, when it issues reflected parallely the length of the focal axis an energetic cyclinder is projected which has much more power in the center that at the edges. In the center of the projected cyclinder the energy is theoretically infinite and, from there, progressively diminishing toward the edges of the beam. This fact is what the author of this invention calls "conical effect" or "conical aberration".

The central energetic concentration of the emerging light beam increases and the surface one diminishes in a ratio which ranges from the infinite to zero. In effect, the central ray theoretically has infinite energy and the overall energy of the rays of the outer circle of the beam is equal to zero. The progression is such that the principle is complied with that the circumference situated in the center of the radius of the emerging beam is equal to the unit, understanding as unit the intensity of original incident energy before its transformation.

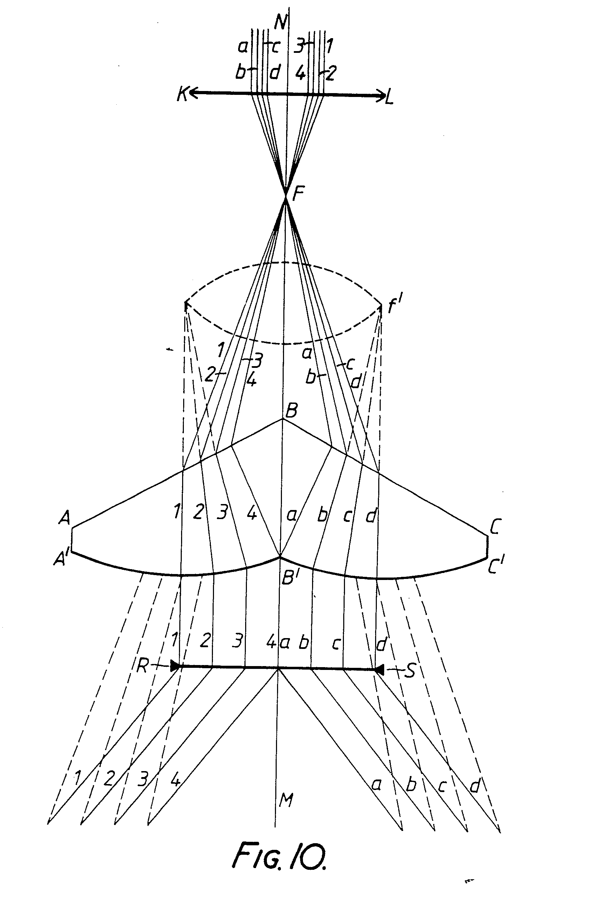

Such effects have important consequences inasmuch as they are applied to the energy field but, in optics, they have a serious consequence, namely that of producing in the image a "conical aberration". In effect, conical lenses and mirrors have the advantage that, in optics, they overcome the spherical aberration and the curve aberration, but they create another one, that is, the "conical aberration". To overcome this deficiency is the reason for employing bicurve-conical lenses, in which the circular divergence of the bicurve surface is precisely that which achieves avoidance of the mentioned conical aberration insofar as the most concentrated rays (of the center of the emerging beam) disassociate toward the less concentrated ones in proportional fashion until reaching the conical surface. And when this is convex all the rays join together in a common focus as if they proceeded from the infinite and with the same energetic density. In this way, the effect obtained is the same as that achieved by the traditional convergent curve lenses (see figure 9), whereby all of the errors have been overcome, such as the spherical) curve and conical ones.

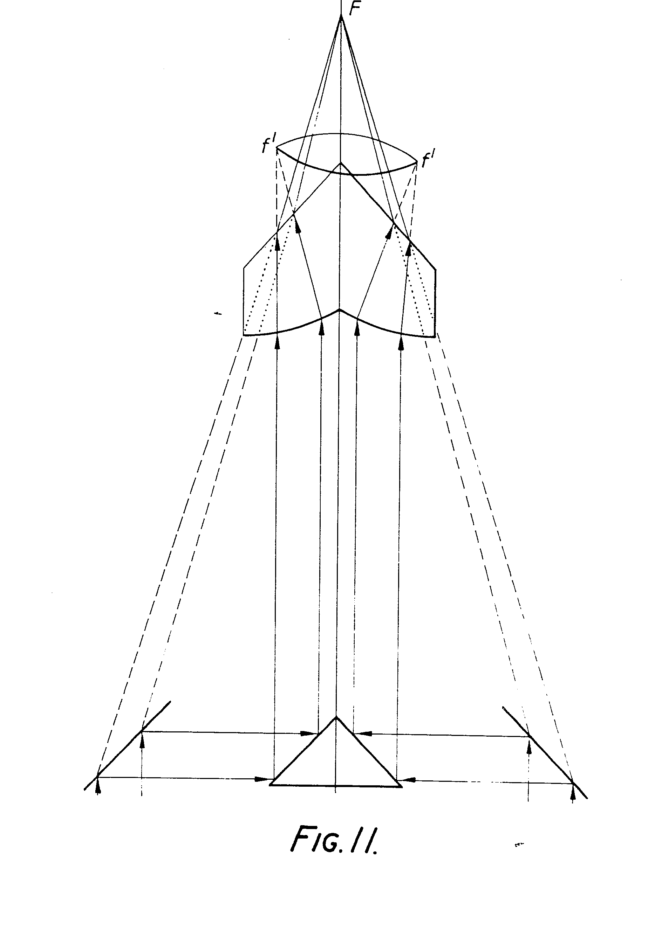

Figures 9, 10 and 11 visually explain the foregoing. In figure 9 a beam (already concentrated by conical mirrors or by conical lenses) falls parallely on the bicurve-biconvexo surface (A', B'-B'-C') and disassociates in a circular beam whose ends would have to cross according to the two focuses f' which represent the diameter of the circle. However, on finding themselves in the convergent conical surface (A-B-C) they emerge converging in the focus F. The rays which arrive at this focus do so with an inclination as thought they proceeded from points situated in the infinite after having been collected by a traditional convergent curve lens. This has been represented in more schematic form in figures 10 and 11.

The example provided in figures 9 to 11 corresponds to a conical-convexo-bicurve-bioconvexolens. The other three lenses shown in figures 1d, 1e and 1f and their application will vary depending on the angle at which the light beam falls which it is sought to distribute, and depending on the way in which, among them, it is sought to combine them, since the conical mirrors and the conical lens can secure this, that the emerging energy be parallely convergent or divergent.

Lastly, it is possible for the bicurve lens to have a monocurve side (concave or convex). Thereby four combinations are possible. The advantage lies in their allowing greater versatility of application and combination with exclusively bicurve lens and with exclusively curved lens.

C L A I M S

1.- Bicurve lenses, characterized in that they have a double curve in one of their surfaces or in both, or in that one surface can be solely conical or solely monocurve, the lense being able to be wider at the edges than at the center in which it has its minimum width, the curve which descends toward the center being convex, so that, on a cross-section through its center, at least one of its surfaces is curved and has the appearance of being formed by two ridges which ascend toward the edges in two increasing convex lines; but the lens can also be narrower at the edges than at the center, where it acquires the maximum width, the curve which ascends from the edge toward the center being concave, so that, on a cross-section of the lense through its center, at least one of its surfaces is curved and has the appearance of being formed by two depressions which descend from the center until the edges in two decreasing concave lines.

2.- Bicurve lenses in accordance with claim 1, characterized in that they can have one conical surface and the other bicurve, and in that the conical surface presents a convex appearance or a concave one.

3.- Bicurve lenses in accordance with claims 1 and 2, characterized in that they can have one monocurve surface and the other bicurve, and in that the monocurve surface can be convex or concave.

4.- Bicurve lenses in accordance with claim 1, characterized in that they can be exclusively bicurve and with double curve in a sole surface, the other flat or they can be bicurves in both surfaces, in which the double curves can be situated in the same direction or in the opposite direction, the flat bicurve-convexo, flat bicurve--concavo, being exclusively bicurve lenses and the bicurve-convexo, bicurve-biconcavo, bicurve-convexo-concavo and bicurve-concavo-convexo lenses being doubly bicurve.

5.- Bicurve lenses in accordance with claim 4, characterized in that the flat bicurve-convexo,the bicurve--biconvexo and bicurve-convexo-concavo lenses are convergent-divergent,and because the flat bicurve-concavo lenses, the bicurve-biconcavo and the bicurve-concavo-convexo lenses are divergent-convergent.

6.- Bicurve lenses in accordance with claims 4 and 5, characterized in the convergent-divergent lenses gather the light, making the rays cross,in a circumference, whose radius coincides with that of the lens, and which is to be found behind the lens, separated from the edges of this by the same focal distance as the one which, the circumstances being the same, would correspond to a normal convergent lens, and the focal axis, instead of in the center, is situated at the ends, occupying a cylindrical surface.

7.- Bicurve lenses in accordance with claims 4 and 5,characterized in that the divergent-convergent lenses separate from among one another the refracted light rays, but making them fall toward the interior, toward the central axis, in which they cross, and their inverse prolongation makes them likewise cross forming a virtual circumference which has the same diameter as the lens, being situated in front of it and separated from the edges of this by the same focal distance as that which, the circumstances being the same, would correspond to a normal divergent lens, and the focal axis, instead of in the center, is situated at the ends, occupying a cyclindrical surface.

8.- Bicurve lenses in accordance with claims 6 and 7, characterized in that they can join one another forming optical systems so that when the first lense is convergent-divergente,the second one can be of the same nature or divergent-convergent, and in that in the former case the light rays are projected in parallel beams forming a circular cap whose width will likewise depend upon the distance between both lenses.

9.- Bicurve lenses in accordance with claim 8, characterized in that when the optical system formed by them has to incorporate a diaphragm, this is placed in the center of the objective, occupying the smallest possible space and from the center closing the objective stretching out toward the outside, the opaque part of the light commencing in the center of the lense and stretching out, in circular fashion, toward the outside until occupying the whole aperture, the transparent part being the outer circular non-diaphragammed outer circular cap, and this circular cap being narrower when the diaphraagm is more stretched out.

10.- Bicurve lenses in accordance with the preceding claims, characterized in that they increase the luminosity, and the field depth and decrease the spherical aberration.

1a    1b    1c    1d    1e    1f

1g      1h      1i      1j

FIG. 1.

FIG.2.

FIG. 3.

FIG. 4.

FIG. 5.

FIG. 6.

FIG. 7.

Fig. 8.

0198676

6/9

0198676

FIG. 9.

0198676

FIG. 10.

0198676

FIG. II.